# EUROPÄISCHE PATENTSCHRIFT

(11) **EP 0 894 656 B1**
(45) Veröffentlichungstag und Bekanntmachung des Hinweises auf die Patenterteilung: **06.10.2004**
(21) Anmeldenummer: 98113953.8
(22) Anmeldetag: 25.07.1998
(51) Int. Cl.: B60J 7/22, B62D 35/00

(54) **Vorrichtung zum Betätigen einer Fahrzeugklappe**
Actioning device for vehicle shutter
Système d'actionnement pour volet de véhicule

(30) Priorität: 30.07.1997 DE 19732698
(43) Veröffentlichungstag der Anmeldung: 03.02.1999
(73) Patentinhaber: WEBASTO KAROSSERIESYSTEME GmbH, D-82131 Stockdorf (DE)
(72) Erfinder: Radmanic, Stjepan, 82291 Mammendorf (DE); Losert, Andreas, 82211 Herrsching (DE)
(74) Vertreter: Wiese, Gerhard

(56) Entgegenhaltungen:
- EP-A- 0 454 945
- DE-U- 8 905 212
- FR-A- 2 369 111

## Beschreibung

Die Erfindung betrifft eine Vorrichtung zum Betätigen einer Fahrzeugklappe, insbesondere eines Heckspoilers, zwischen einer eingefahrenen Ruhestellung und einer ausgestellten Arbeitsstellung, mit einem Steuerglied, das mit einer Kurvenbahn auf Grundlage einer linearen Relativbewegung parallel zu einer ersten Schwenkachse der Fahrzeugklappe unter Betätigung der Fahrzeugklappe zusammenwirkt.

Eine derartige Vorrichtung zum Betätigen einer Fahrzeugklappe ist aus der DE-AS 26 58 433 bekannt. Bei dieser bekannten Betätigungsvorrichtung ist die Fahrzeugklappe an einer Querkante über ein Scharnier drehgelagert und an dieser Kante ist einwärts vorstehend die Kurvenbahn angeformt. Das mit der Kurvenbahn zusammenwirkende Steuerglied ist fest mit einem Betätigungsseil verbunden, das zur linearen Verstellung des Steuerglieds dient, das auf der Steuerfläche der Steuerkurve abläuft und ein Hoch- und Herunterklappen der Fahrzeugklappe zur Folge hat. Diese relativ einfache Auf- und Zuklappbewegung für die Fahrzeugklappe eignet sich für einen in dieser Druckschrift genannten Einsatzzweck, nämlich für eine Fahrzeugklappe im Bereich des Schiebedachs. Sie eignet sich jedoch weniger für eine solche Fahrzeugklappe, die eine komplexere Bewegung ausführen sell, wie etwa eine Fahrzeugklappe in Gestalt eines Heckspoilers.

Eine Aufgabe der vorliegenden Erfindung besteht darin, eine eingangs genannte Betätigungsvorrichtung für eine Fahrzeugklappe bereitzustellen, die eine komplexere Schwenkbewegung für die Fahrzeugklappe mit einfachen Mitteln zu realisieren erlaubt.

Gelöst wird diese Aufgabe durch die kennzeichnenden Merkmale des Anspruchs 1. Vorteilhafte Weiterbildungen der Erfindung sind in den Unteransprüchen angegeben.

Demnach schafft die Erfindung mit anderen Worten eine Betätigungsvorrichtung für eine Fahrzeugklappe mit zwei in Querrichtung versetzt angeordneten Schwenkachsen für die Fahrzeugklappe, die außerdem entlang unterschiedlich gekrümmten Bahnen räumlich verstellbar sind, so daß für die Fahrzeugklappe eine im Vergleich zum Stand der Technik relativ komplexe Schwenkverstellung, angepaßt an die speziellen Gegebenheiten in der Praxis möglich ist.

Realisiert wird diese Schwenkverstellung der Fahrzeugklappe dadurch, daß im Gegensatz zum Stand der Technik keine feste Verbindung zwischen der Kurvenbahn und der Fahrzeugklappe vorgesehen ist, sondern eine Verbindung über einen Hebel, wobei ein zusätzlicher Hebel bzw. ein Hilfshebel vorgesehen ist, der von der Steuerkurve unabhängig ist und gewissermaßen eine gezielte Nachführung der durch den ersten Hebel verursachten Schwenkverstellung der Fahrzeugklappe bewirkt. Durch eine derartige Konstruktion wird gewährleistet, daß die Betätigungsvorrichtung für die Fahrzeugklappe relativ raumsparend untergebracht werden, und die Fahrzeugklappe in eine optimal strömungsgünstige Position ausgefahren und eingeregelt werden kann, die insbesondere bei ihrem Einsatz als Spoiler, wie etwa als Heckspoiler angestrebt wird.

Die relative Drehverstellung zwischen der Steuerkurve, die bevorzugt als Stegkulisse gebildet ist, und dem ihr zugeordneten ersten Drehhebel kann in beliebiger Weise erfolgen, nämlich zum einen bei stationär gelagertem ersten Drehhebel und linear verstellter Stegkulisse und zum anderen durch stationär gehaltene Stegkulisse und linear verstellten ersten und zweiten Drehhebeln. Bevorzugt ist aufgrund einfacherer Ausführbarkeit die Variante mit linear verstellter Kurvenbahn bzw. Stegkulisse.

Nachfolgend wird die Erfindung anhand der Zeichnung beispielhaft näher erläutert; es zeigen:
- Fig. 1: eine schematische Seitenansicht einer Ausführungsform der erfindungsgemäßen Vorrichtung zum Betätigen einer Fahrzeugklappe, die als Heckspoiler dient, und
- Fig. 2: eine perspektivische Ansicht der Betätigungsvorrichtung von Fig. 1 ohne Darstellung der Fahrzeugklappe.

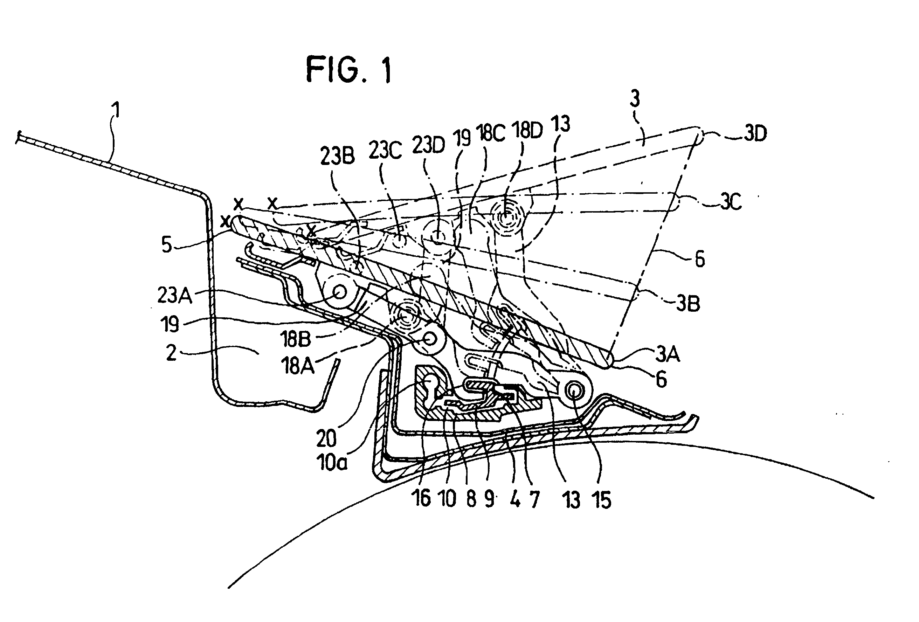

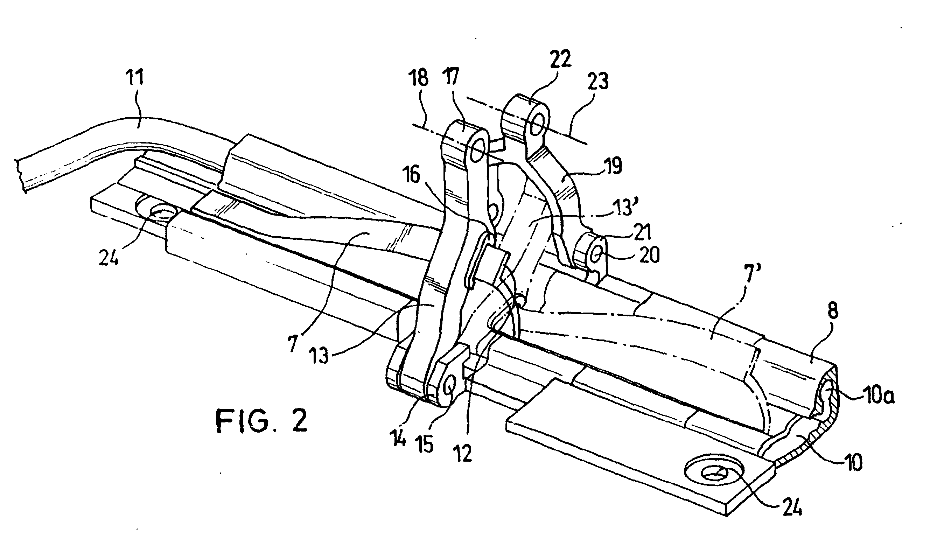

In Fig. 1 ist das schräg abfallende Ende der Dachaußenhaut eines Fahrzeugs mit der Bezugsziffer 1 bezeichnet. Eine mit der Bezugsziffer 2 bezeichnete Mulde an dieser Stelle ist durch das vordere Ende der Fahrzeugklappe 3 verschlossen, wenn diese sich in ihrer Ruhestellung befindet. In der Ruhestellung ist die Fahrzeugklappe 3 durch 3A bezeichnet, während sie in ihrer Arbeitsstellung, d.h. in ihrer vollständig ausgestellten Stellung mit 3D bezeichnet ist. Zwei Zwischenstellungen der Klappe sind mit 3B und 3C bezeichnet. Hinter der Mulde 2 ist ein trogartiger Profilrahmen 4, bestehend aus mehreren Einzelblechen angeordnet, der als Montagerahmen für eine Befestigung der Befestigungslaschen 24 der Vorrichtung zum Betätigen der Fahrzeugklappe 3 dient. Der Aufbau dieser Betätigungsvorrichtung ist im einzelnen nachfolgend anhand von Fig. 2 erläutert.

Wie aus Fig. 1 hervorgeht, führt die Fahrzeugklappe 3 eine im Vergleich zum Stand der Technik relativ komplexe Bewegung aus. Die Klappe wird dabei nicht nur um eine einzige Achse an einer Querkante verschwenkt, sondern führt eine kombinierte Schwenk/Verschiebebewegung aus, die dadurch gekennzeichnet ist, daß ihre in Fahrtrichtung vordere Kante 5 sich entlang einer gekrümmten Bahn bewegt, die ausgehend von der Ruhestellung relativ stark ansteigt, dann ein Maximum erreicht und unter den Ausgangspunkt abfällt, wie in Fig. 1 in den verschiedenen Bewegungsstadien jeweils durch "x" schematisch gezeigt. Die Hinterkante 6 führt im Gegensatz hierzu, wie durch eine strichpunktierte gerade Linie gezeigt, im wesentlichen eine steil ansteigende Bewegung durch und legt eine wesentlich größere Strecke zurück als die Vorderkante 5. Verursacht wird diese Bewegung durch die erfindungsgemäße Steuervorrichtung, die auf zwei Drehhebeln basiert, von denen einer mit einem Ende auf einer Kurvenbahn abläuft, während der andere Hebel indirekt über die Fahrzeugklappe 3 gesteuert eine einfache Schwenkhilfsbewegung ausführt.

Wie in Fig. 2 gezeigt, weist die erfindungsgemäße Betätigungsvorrichtung für die Fahrzeugklappe 3 eine Kurvenbahn in Gestalt einer Stegkulisse 7 auf, die in einer quer zur Fahrzeuglängsachse verlaufenden Hohlprofil-Führungsschiene 8 linear verstellbar geführt ist. Stegkulisse 7 und Führungsschiene 8 sind in Fig. 1 im Querschnitt gezeigt.

Die Stegkulisse 7 ist am unteren Ende mit einem quer verlaufenden Führungssteg 9 versehen, der in einem komplementär hierzu gebildeten Hohlraum 10 der Führungsschiene 8 eingreift. Dieser Hohlraum 10 weist außerdem einen im Querschnitt in etwa kreisförmigen Abschnitt 10a auf, in welchem ein Antriebsmittel zum Verschieben der Stegkulisse 7 geführt ist, nämlich beispielsweise ein nicht dargestelltes Antriebskabel, das über ein Führungsrohr 11 an ein Ende der Führungsschiene 8 herangeführt wird.

Die Stegkulisse 7 ist in ihrem über die Führungsschiene 8 vorstehenden Teil kreisförmig gekrümmt ausgebildet und endet in einem Steg 12, der die Kurvenbahn der Stegkulisse festlegt und entlang einer Raumkurve verläuft, die die Schwenkverstellung eines schwenkbar zwangsgeführten Steuerglieds erlaubt.

Im vorliegenden Fall handelt es sich bei dem Steuerglied, das mit der Steuerkurve bzw. der Stegkulisse 7 zusammenarbeitet, um einen ersten Drehhebel 13, der seitlich an der Führungsschiene 8 über eine erste Drehhebelachse 15 schwenkbar in einem Schwenklager 14 gelagert ist. Die erste Drehhebelachse 15 verläuft parallel zur Führungsschiene 8. In etwa auf halber Höhe weist der erste Drehhebel 13 einen klauenartigen Abschnitt 16 auf, der komplementär zu dem Steg 12 der Stegkulisse 7 gebildet ist, diesen Steg 12 von oben übergreift und auf ihm reitet. In Fig. 2 ist der Drehhebel 13 in zwei Stellungen gezeigt, nämlich in seiner Arbeitsstellung, in welcher der Drehhebel 13 auf dem oberen Ende der Stegkulisse 7 reitet, und in einer Ruhestellung, in welcher der Drehhebel 13 auf dem unteren Ende der Stegkulisse 7 reitet. In der Arbeitsstellung ist der Drehhebel 13 mit der Bezugsziffer 13 bezeichnet und in der Ruhestellung ist der Hebel mit der Bezugsziffer 13' bezeichnet. Dasselbe gilt für die Stegkulisse, die in ihrer in Fig. 2 gezeigten linken Extremstellung, die der Arbeitsstellung des ersten Drehhebels 13 entspricht, mit der Bezugsziffer 7 bezeichnet ist, während sie in der anderen, der Ruhestellung des Drehhebels 13' entsprechenden Extremposition mit 7' bezeichnet ist.

Am oberen Ende des ersten Drehhebels 13 ist ein weiteres Drehlager vorgesehen, das in Fig. 2 schematisch mit 17 bezeichnet ist Dieses auch als oberes Drehlager 17 bezeichnete Lager legt eine erste Schwenkachse 18 für die Fahrzeugklappe 3 fest. Diese Schwenkachse 18 ist in Fig. 2 schematisch strichliert gezeigt. Im übrigen besteht das obere Drehlager 17 aus einer entsprechenden Bohrung am oberen Ende des ersten Drehhebels 13 und einer entsprechenden Welle bzw. einem Zapfen, der an der Innenseite der Fahrzeugklappe 3 vorgesehen und fest mit dieser verbunden ist.

Wie ferner aus Fig. 2 hervorgeht, befindet sich die erste Drehhebelachse 15 unterhalb der Führungsbahn der Stegkulisse 7, während die obere Drehhebelachse, die mit der ersten Schwenkachse 18 der Fahrzeugklappe 3 zusammenfällt, in sämtlichen Stellungen des ersten Drehhebels 13 oberhalb der Stegkulisse 7 zu liegen kommt.

Gegenüber zu dem ersten Drehhebel 13 befindet sich ein zweiter Drehhebel 19, der am unteren Ende über eine zweite Drehhebelachse 20 in einem Schwenklager 21 drehgelagert ist, das am anderen Seitenrand der Führungsschiene 8 fest angebracht ist, und zwar geringfügig oberhalb des Schwenklagers 14 für das untere Ende des ersten Drehhebels 13. Die zweite Drehhebelachse 20 verläuft parallel zur ersten Drehhebelachse bzw. zur ersten Schwenkachse 18. Der zweite Drehhebel 19 hat Gabelform und damit ein weiteres, in Fig. 2 nicht gezeigtes koaxiales Schwenklager zur Festlegung der zweiten Drehhebelachse 20.

Am oberen Ende des zweiten Drehhebels 19 ist ein oberes Drehlager 22 zur Drehverbindung mit einem entsprechenden Schwenklagerorgan auf der Innenseite der Fahrzeugklappe 3 vorgesehen. Dieses Schwenklagerorgan befindet sich, in Fahrzeuglängsrichtung gesehen, beabstandet von dem Schwenklager für das obere Ende des ersten Drehhebels 13. Das obere Drehlager 22 legt die zweite Schwenkachse 23 für die Fahrzeugklappe 3 fest.

Der zweite Drehhebel 19 befindet sich im Gegensatz zum ersten Drehhebel 13 nicht im Eingriff mit der Stegkulisse 7 und führt seine Schwenkbewegung indirekt über die Fahrzeugklappe 3 durch deren Schwenkverstellung mittels des ersten Drehhebels 13 aus, wie am besten aus Fig. 1 hervorgeht. Diese Zwangsführung des oberen Endes des zweiten Drehhebels 19 ist in Fig. 1 mit der Abfolge 23A, 23B, 23C und 23D bezeichnet. Das obere Ende des zweiten Drehhebels 19 legt bei der Verstellung der Fahrzeugklappe 3 zwischen deren Ruhestellung und deren Arbeitsstellung im wesentlichen eine Kreisbahn zurück. Das obere Ende des ersten Drehhebels 13 durchläuft ebenfalls eine in gleicher Richtung gekrümmte Kreisbahn, wie durch die Abfolge der Buchstaben 18A, 18B, 18C und 18 D gezeigt. Diese beiden Kurvenbahnen sind so gestaltet, daß die vorstehend erläuterte Bewegung der Vorderkante 5 und der Hinterkante 6 der Fahrzeugklappe 3 zustandekommt.

Die vorstehend erläuterte Betätigungsvorrichtung kann entweder als einziges Teil in der Mitte der Fahrzeugklappe vorgesehen sein, oder es sind zwei derartige Teile an beiden Seiten der Fahrzeugklappe vorgesehen.

Die Anordnung ist insgesamt für verschiedenste Fahrzeugklappen, wie Hebedächer, Cockpit-Scheiben von Motorrädern, Motorhauben, Kofferraumdeckel, Ladeluken, Windabweiser, Windabweislamellen oder ähnliches geeignet.

### Bezugszeichenliste

- 1: Fahrzeugheck ; Dachaußenhaut
- 2: Mulde
- 3: Fahrzeugklappe
- 4: Profilrahmen
- 5: Vorderkante
- 6: Hinterkante
- 7: Stegkulisse
- 8: Führungsschiene
- 9: Führungssteg
- 10: Hohlraum
- 10a: Hohlraumabschnitt
- 11: Führungsrohr
- 12: Steg
- 13: erster Drehhebel
- 14: Schwenklager
- 15: erste Drehhebelachse
- 16: klauenartiger Abschnitt
- 17: oberes Drehlager
- 18: erste Schwenkachse
- 19: zweiter Drehhebel
- 20: zweite Drehhebelachse
- 21: Schwenklager
- 22: oberes Drehlager
- 23: zweite Schwenkachse
- 24: Befestigungslaschen

## Patentansprüche

1. Vorrichtung zum Betätigen einer Fahrzeugklappe (3) insbesondere eines Heckspoilers, zwischen einer eingefahrenen Ruhestellung und einer ausgestellten Arbeitsstellung, mit einem Steuerglied (13, 16), das mit einer als Steuerkurve dienenden Kurvenbahn (7) auf Grundlage einer linearen Relativbewegung parallel zu einer ersten Schwenkachse (18) der Fahrzeugklappe (3) unter Betätigung der Fahrzeugklappe zusammenwirkt, **dadurch gekennzeichnet, daß** das Steuerglied ein auf der Steuerkurve (7) reitender erster Drehhebel (13) ist, der mit einem Ende einerseits oberhalb der Steuerkurve (7) auf der Unterseite der Fahrzeugklappe (3) um deren erste Schwenkachse (18) und andererseits mit seinem anderen Ende unterhalb der Steuerkurve (7) entfernt von der Fahrzeugklappe (3) um eine erste Drehhebelachse (15) parallel zur ersten Schwenkachse (18) drehgelagert ist, und daß ein zweiter Drehhebel (19) außer Eingriff mit der Steuerkurve (7) vorgesehen ist, der mit einem Ende einerseits auf der Unterseite der Fahrzeugklappe (3) um eine zweite Schwenkachse (23) seitlich in einer vorgegeben Richtung zur ersten Schwenkachse (18) versetzt sowie parallel zu dieser und mit seinem anderen Ende anderseits um eine zweite Drehhebelachse (20) seitlich in derselben vorgegeben Richtung versetzt sowie parallel zur ersten Drehhebelachse (15) drehgelagert ist.

2. Vorrichtung nach Anspruch 1, **dadurch gekennzeichnet, daß** die Anlenkstellen der beiden Drehhebel (13, 19) an der Unterseite der Fahrzeugklappe (3) entfernt von derjenigen Kante (6) der Fahrzeugklappe angeordnet sind, die bei sich in Arbeitsstellung befindlicher Fahrzeugklappe oben liegt.

3. Vorrichtung nach Anspruch 1 oder 2, **dadurch gekennzeichnet, daß** der erste Drehhebel (13) näher als der zweite Drehhebel (19) an derjenigen Kante (6) der Fahrzeugklappe (3) angeordnet ist, die bei sich in Arbeitsstellung befindlicher Fahrzeugklappe (3) oben liegt und daß der erste Drchhebel (13) länger als der zweite Drehhebel (19) ist.

4. Vorrichtung nach Anspruch 1, 2 oder 3, **dadurch gekennzeichnet, daß** die Drehhebelachsen (15, 20) am unteren Ende der Drehhebel (13, 19) stationär angeordnet sind, während die Steuerkurve (7) linear verschieblich in einer Schiene (8) gelagert und von einem Linearantrieb angetrieben ist.

5. Vorrichtung nach einem der Ansprüche 1 bis 4, **dadurch gekennzeichnet, daß** die Steuerkurve (7) eine Stegkulisse ist, deren Stegrand (12) vom ersten Drehhebel (13, bei 16) umgriffen ist.

## Claims

1. A device for actuating a motor vehicle tailgate (3), especially a tail spoiler, between a retracted rest position and a raised working position, with a control member (13, 16), which serves as a cam track on the basis of a linear relative movement parallel with a first pivot axis (18) of the vehicle tailgate (3) to actuate the vehicle tailgate, **characterised in that** the control member is a first pivoted lever (13) riding on the cam track (7) and which is, at one end, above the cam track (7), on the underside of the vehicle tailgate (3), mounted to rotate about its first pivot axis (18) and has its other end, underneath the cam track (7) remote from the vehicle tailgate (3), mounted to rotate about a first pivot lever axis (15) parallel with the first pivot axis (18), and **in that** a second pivoted lever (19) is provided, which is not in engagement with the cam track (7) and which at one end is mounted to rotate on the underside of the vehicle tailgate (3) about a second pivot axis (23), offset laterally in a predetermined direction in relation to the first pivot axis (18) and parallel therewith, its other end being mounted to rotate about a second pivot lever axis (2) offset laterally in the same predetermined direction and parallel with the first pivot lever axis (15).

2. A device according to claim 1, **characterised in that** the points of articulation of the two pivoted levers (13, 19) are disposed on the under side of the vehicle tailgate (3) remote from that edge (16) of the tailgate which is upwards when the vehicle tail is in its working position.

3. A device according to claim 1 or 2, **characterised in that** the first pivoted lever (13) is closer than the second pivoted lever (19) to that edge (6) of the vehicle tailgate (3) which is upwards when the vehicle tailgate (3) is in its working position and **in that** the first pivoted lever (13) is longer than the second pivoted lever (19).

4. A device according to claim 1, 2 or 3, **characterised in that** the pivoted lever axes (15, 20) are stationary at the bottom end of the pivoted levers (13, 19) while the cam track (7) is mounted for linear displacement in a rail (8) and is driven by a linear drive.

5. A device according to one of claims 1 to 4, **characterised in that** the cam track (7) is a bridge crank, the edge (12) of which has the first pivoted lever (13) engaging around it (at 16).

## Revendications

1. Dispositif pour l'actionnement d'un volet de véhicule (3), notamment d'un spoiler arrière, entre une position de repos rentrée et une position de travail déployée, avec un organe de commande (13, 16) qui coopère avec une piste de came servant de came de commande (7) sur la base d'un mouvement relatif linéaire parallèlement à un premier axe de pivotement (18) du volet de véhicule (3), en actionnant le volet de véhicule, **caractérisé en ce que** l'organe de commande est un premier levier rotatif (13), qui chevauche la came de commande (7) et qui est monté à rotation d'une part, par une première extrémité, au-dessus de la came de commande (7) sur le dessous du volet de véhicule (3) autour du premier axe de pivotement (18) de ce dernier, et d'autre part, par son autre extrémité, en dessous de la came de commande (7), à distance du volet de véhicule (3), autour d'un premier axe de levier rotatif (15) parallèle au premier axe de pivotement (18), et **en ce qu'**il est prévu un deuxième levier rotatif (19), qui n'est pas engagé avec la came de commande (7) et qui est monté à rotation d'une part, par une première extrémité, sur le dessous du volet de véhicule (3) autour d'un deuxième axe de pivotement (23) décalé latéralement dans une direction prédéfinie par rapport au premier axe de pivotement (18) et parallèle à ce dernier, et d'autre part, par son autre extrémité, autour d'un deuxième axe de levier rotatif (20) décalé latéralement dans la même direction prédéfinie et parallèle au premier axe de levier rotatif (15).

2. Dispositif selon la revendication 1, **caractérisé en ce que** les points d'articulation des deux leviers rotatifs (13, 19) sur le dessous du volet de véhicule (3) sont disposés à distance du bord (6) du volet de véhicule qui se trouve en haut lorsque le volet de véhicule est en position de travail.

3. Dispositif selon la revendication 1 ou 2, **caractérisé en ce que** le premier levier rotatif (13) est disposé plus près que le deuxième levier rotatif (19) du bord (6) du volet de véhicule (3) qui se trouve en haut lorsque le volet de véhicule (3) est en position de travail, et **en ce que** le premier levier rotatif (13) est plus long que le deuxième levier rotatif (19).

4. Dispositif selon la revendication 1, 2 ou 3, **caractérisé en ce que** les axes (15, 20) de leviers rotatifs sont disposés fixement à l'extrémité inférieure des leviers rotatifs (13, 19), tandis que la came de commande (7) est montée à coulissement linéaire dans une glissière (8) et est entraînée par un entraînement linéaire.

5. Dispositif selon l'une des revendications 1 à 4, **caractérisé en ce que** la came de commande (7) est une coulisse à nervure, autour du bord formant nervure (12) de laquelle s'engage le premier levier rotatif (13, en 16).
